# DEMANDE DE BREVET EUROPEEN

(11) **EP 2 112 386 A2**
(43) Date de publication de la demande: **28.10.2009**
(21) Numéro de dépôt: 09352004.7
(22) Date de dépôt: 21.04.2009
(51) Int. Cl.: F16B 37/04

(54) **Écrou pour rail profilé ouvert**

(30) Priorité: 23.04.2008 FR 0802266
(71) Demandeur: I.C.M. Group, 21500 Montbard (FR)
(72) Inventeur: Quertelet, Stéphane, 60190 Remy (FR); Letourneur, Mickaël, 14540 Soliers (FR); Warin, Ludovic, 60350 Jaulzy (FR)
(74) Mandataire: Santarelli

(57) **Abrégé**

Cet élément de fixation (2) est destiné à être monté sur un rail profilé comportant une face ouverte le long de laquelle se trouvent des saillies de retenue.

Cet élément de fixation (2) comporte une plaque de fixation (4) dimensionnée de manière à pouvoir être introduite à l'intérieur du rail profilé (18) par sa face ouverte dans une première position puis venir s'engager en pivotant, par exemple de 90°, derrière les saillies de retenue (20).

La plaque de fixation (4) est reliée à un cadre d'appui (6) sensiblement parallèle à la plaque de fixation (4) mais décalé par rapport à celle-ci.

Le cadre comporte des moyens de verrouillage (14) élastiques qui, en position montée, sont disposés entre les saillies de retenue (20) du rail profilé (18).

## Description

La présente invention concerne un élément de fixation comportant un écrou pour rail profilé ouvert.

Pour réaliser des installations industrielles, par exemple en utilisant des chemins de câbles, des supports sont montés pour recevoir par la suite divers éléments comme des consoles, dispositifs de fixation, etc.. Il est courant d'utiliser des profilés en C pour réaliser des dispositifs de supportage.

Il est connu de munir un rail profilé en forme de C d'un élément de fixation comportant un écrou pour permettre un montage vissé sur ledit rail. Ce rail profilé présente une face ouverte et il est connu d'introduire dans cette ouverture un élément de fixation. Pour maintenir ce dernier, celui-ci est pivoté d'un quart de tour, soit 90°. En effet, habituellement, un profil en forme de C présente des deux côtés de l'ouverture, sur toute la longueur de celles-ci, des saillies de retenue. Les bords libres de l'ouverture sont repliés vers l'intérieur pour former lesdites saillies de retenue. En venant pivoter l'élément de fixation de 90°, celui-ci peut venir prendre appui derrière lesdites saillies de retenue.

Le document EP-1 201 940 révèle un tel élément de fixation qui peut être introduit dans un rail profilé en C, être pivoté de 90° pour venir en butée contre des saillies de retenue. Il n'est pas possible pour cette pièce de réaliser un pré-montage de l'élément de fixation par rapport au rail de support.

Le document EP-1 201 941 révèle un élément de fixation qui permet également de réaliser le positionnement de l'élément de fixation en maintenant celui-ci par rapport au rail de fixation. Sans reprendre ici toutes les caractéristiques du dispositif décrit dans ce document de l'art antérieur, celui-ci comporte plusieurs pièces qui demandent un assemblage et est d'un coût de revient relativement élevé.

La présente invention a alors pour but de fournir un écrou pour rail profilé facile à réaliser et permettant un pré-montage sur le rail profilé de support.

À cet effet elle propose un élément de fixation pour rail profilé comportant une face ouverte le long de laquelle se trouvent des saillies de retenue, ledit élément de fixation comportant une plaque de fixation dimensionnée de manière à pouvoir être introduite à l'intérieur du rail profilé par sa face ouverte dans une première position puis venir s'engager en pivotant, par exemple de 90°, derrière les saillies de retenue, pour venir dans une seconde position, dite position montée.

Selon la présente invention, la plaque de fixation est reliée à un cadre d'appui ouvert sensiblement parallèle à la plaque de fixation mais décalé par rapport à celle-ci, et ledit cadre comporte des moyens de verrouillage élastiques qui, en position montée, sont disposés entre les saillies de retenue du rail profilé.

Ainsi l'élément de fixation selon l'invention est d'une part de conception simple et d'autre part facile à utiliser. En effet, il comporte une plaque de fixation qui, par un système de type quart-de-tour, peut venir se positionner par rapport au rail profilé. Le cadre d'appui permet le maintien par rapport au rail profilé et les moyens de verrouillage permettent de maintenir le positionnement de l'élément de fixation sur le rail profilé.

Dans une forme de réalisation permettant un montage vissé sur l'élément de fixation, la plaque de fixation présente une zone cylindrique taraudée s'étendant sensiblement perpendiculairement au plan de la plaque de fixation. De préférence, la zone cylindrique taraudée ne forme qu'une seule pièce avec la plaque de fixation. Ceci est faisable par exemple en réalisant cette zone cylindrique par poinçonnage, avec un taraudage ultérieur. Il est possible ainsi de réaliser simplement un "écrou" sur la plaque de fixation, sans avoir besoin de venir fixer -souder- un écrou extérieur sur la plaque de fixation pour obtenir un taraudage sur celle-ci.

Pour améliorer la rigidité de l'élément de fixation selon l'invention, la plaque de fixation présente avantageusement des nervures de renfort à sa périphérie.

Une forme de réalisation d'un élément de fixation selon la présente invention prévoit que le cadre d'appui présente trois branches disposées en U dans un même plan et que la plaque de fixation est fixée au cadre d'appui par un pontet de liaison reliant la plaque de fixation à la branche centrale du cadre d'appui.

Les moyens de verrouillage d'un élément de fixation comportent par exemple une languette élastique s'étendant à partir du cadre d'appui vers la plaque de fixation. Ces moyens se trouvent alors dans une position intermédiaire entre le cadre d'appui et la plaque de fixation.

Lorsqu'un élément de fixation selon l'invention présente un cadre d'appui et une languette élastique tels que décrits aux deux paragraphes précédents, alors la languette élastique s'étend avantageusement à partir d'une extrémité d'une branche du U vers l'extrémité de l'autre branche du U, la languette étant rattachée à une seule extrémité d'une branche du U. Ceci permet d'avoir une forme de réalisation compacte, nécessitant donc que relativement peu de matière pour sa réalisation. Dans cette forme de réalisation, la languette élastique est de préférence pliée selon deux directions distinctes par rapport à la branche du U à laquelle elle est rattachée. Ce double pliage facilite la mise en place de l'élément de fixation sur un rail profilé.

Pour limiter son prix de revient, un élément de fixation selon la présente invention est avantageusement réalisé par découpe et pliage d'une tôle, avec réalisation d'un taraudage.

Enfin la présente invention concerne également un ensemble comportant un rail profilé présentant une face ouverte le long de laquelle se trouvent des saillies de retenue et un élément de fixation, **caractérisé en ce que** l'élément de fixation est un élément de fixation tel que décrit plus haut.

Des détails et avantages de la présente invention ressortiront mieux de la description qui suit, faite en référence aux dessins schématiques annexés sur lesquels :
La figure 1 est une vue en perspective et de dessous d'un élément de fixation selon la présente invention,
La figure 2 est une vue en perspective et de dessus de l'élément de la figure 1,
La figure 3 est une vue de dessous de l'élément de fixation des figures 1 et 2,
La figure 4 est une vue de dessus de l'élément de fixation des figures 1 à 3,
La figure 5 est une vue de côté de l'élément de fixation des figures 1 à 4, et
La figure 6 est une vue en perspective, à échelle réduite par rapport aux figures précédentes, illustrant le montage d'un élément de fixation des figures 1 à 5 sur un rail profilé présentant une section en C.

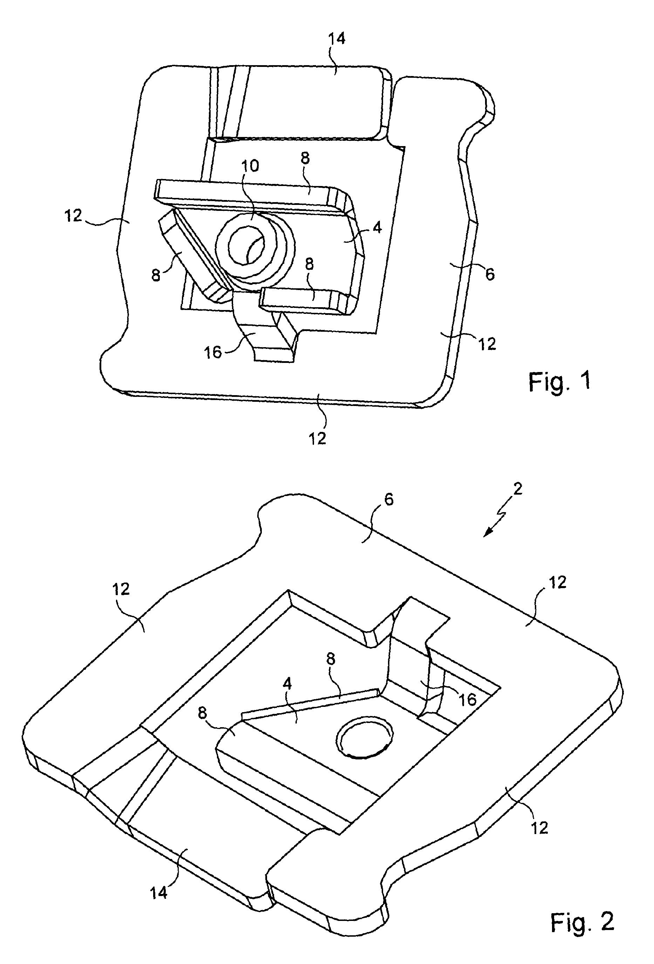

Les figures 1 à 5 représentent un élément de fixation 2 comportant d'une part une plaque de fixation 4 et d'autre part un cadre d'appui 6.

La plaque de fixation 4 se présente sous la forme d'une plaque dont certains bords sont repliés perpendiculairement par rapport au plan de la plaque de manière à former des nervures 8. Ces dernières permettent de rigidifier la plaque. Dans la forme de réalisation représentée, trois nervures sont prévues.

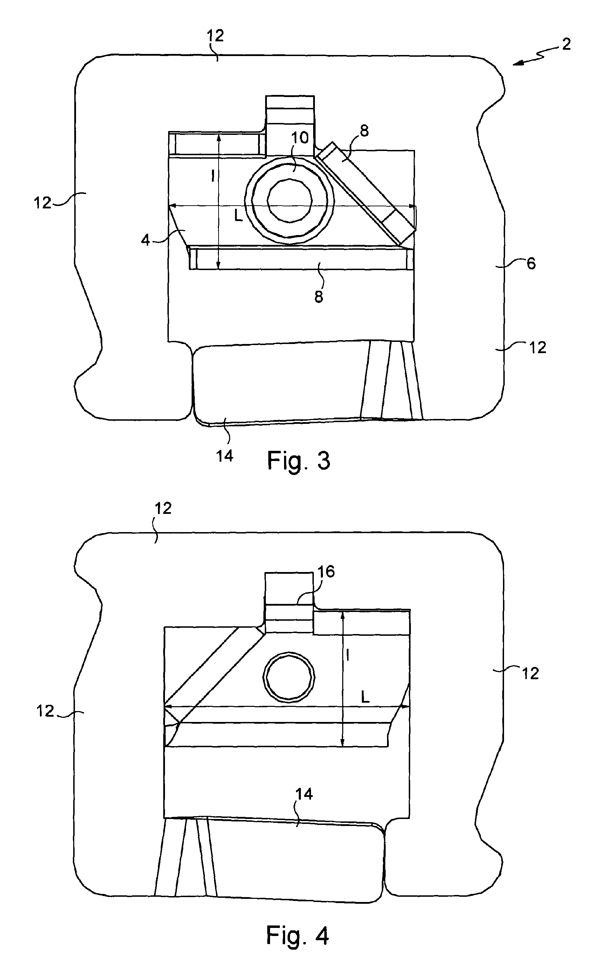

La forme de la plaque est une forme polygonale allongée. Elle présente selon une première direction une largeur I, nervures 8 comprises, et dans une seconde direction, perpendiculaire à la première direction, une longueur L, supérieure à la largeur I (figures 3 et 4).

Sensiblement au centre de la plaque de fixation 4, sensiblement à mi-largeur et à mi-longueur, la plaque de fixation 4 comporte une zone cylindrique 10 s'étendant, par rapport à la plaque, du même côté que les nervures 8. Cette zone cylindrique 10 est réalisée par déformation de matière à l'aide d'un poinçon. L'intérieur de la zone cylindrique 10 est taraudé réalisant ainsi, au niveau de cette zone cylindrique 10 et de la plaque de fixation 4, un écrou.

La plaque de fixation 4, comme il ressort de la description qui suit, est donc utilisée d'une part pour le maintien de l'élèment de fixation 2 sur un support décrit plus loin et d'autre part pour recevoir une tige filetée que l'on veut solidariser audit support.

Le cadre d'appui 6 présente en vue de dessus (figure 4) une forme sensiblement carrée et entoure la plaque de fixation 4. Ce cadre d'appui 6 comporte trois branches 12 disposées dans un même plan, reliées les unes aux autres en formant un U. Dans la vue de dessus, les extrémités libres des branches du U sont reliées par une patte élastique 14. En fait, la patte élastique 14 est rattachée à une extrémité libre d'une branche du U et vient au contact de l'extrémité de l'autre branche du U sans qu'il y ait toutefois une liaison entre la patte élastique 14 et cette autre branche du U. Le cadre formé par les trois branches 12 et la patte élastique 14 est ainsi un cadre ouvert, une fente étant réalisée entre une branche 12 et l'extrémité libre de la patte élastique 14.

Comme on peut le voir sur les figures, la patte élastique 14 ne se trouve pas dans le même plan que les branches 12 du cadre d'appui 6. Elle se trouve dans une position intermédiaire (et inclinée) par rapport au plan des branches 12 et au plan de la plaque de fixation 4.

On remarque sur les figures 1 à 4 que deux pliures sont réalisées entre l'extrémité de la branche 12 du cadre d'appui 6 à laquelle la patte élastique 14 est rattachée et la patte élastique 14 elle-même. Un premier pli fait que la patte élastique 14 s'étend en dessous du cadre d'appui 6. On considère ici, et dans la suite de la description, que le cadre d'appui est disposé dans un plan sensiblement horizontal, de même que la plaque de fixation 4, et que le cadre d'appui 6 se trouve au-dessus de la plaque de fixation 4.

Outre l'inclinaison vers le bas depuis son point d'attache à la branche 12 correspondante, la patte élastique 14 est aussi inclinée de l'intérieur vers l'extérieur du cadre d'appui 6 par un second pli. Ainsi, l'arête longitudinale de la languette 14 se trouvant vers l'intérieur du cadre d'appui 6, se trouve à une altitude plus élevée que l'arête longitudinale opposée se trouvant vers l'extérieur du cadre d'appui 6.

On remarque sur les figures que la plaque de fixation 4 est reliée au cadre d'appui 6 par un pontet de liaison 16. Ce dernier relie l'un des grands côtés de la plaque de fixation 4 à la branche 12 centrale du cadre d'appui 6, à l'intérieur de ce cadre d'appui 6.

L'ensemble de l'élément de fixation 2 décrit ci-dessus est réalisé entièrement par découpe et emboutissage d'une tôle métallique. Seule une opération de taraudage est réalisée à l'intérieur de la zone cylindrique 10, le taraudage n'étant pas représenté sur les dessins. Ainsi, l'ensemble de la plaque de fixation 4, avec sa zone cylindrique 10 et ses nervures 8, est obtenu par découpe, pliage et emboutissage de la matière se trouvant au préalable entre les branches 12 du cadre d'appui 6 et la patte élastique 14. Ceci ressort notamment des figures 3 et 4. Ce procédé de réalisation, en une seule pièce, permet d'obtenir un élément de fixation bon marché. Une fois l'outil de réalisation fabriqué, des éléments de fixation tels que décrits ci-dessus peuvent être réalisés à la chaîne, quasiment sans intervention humaine.

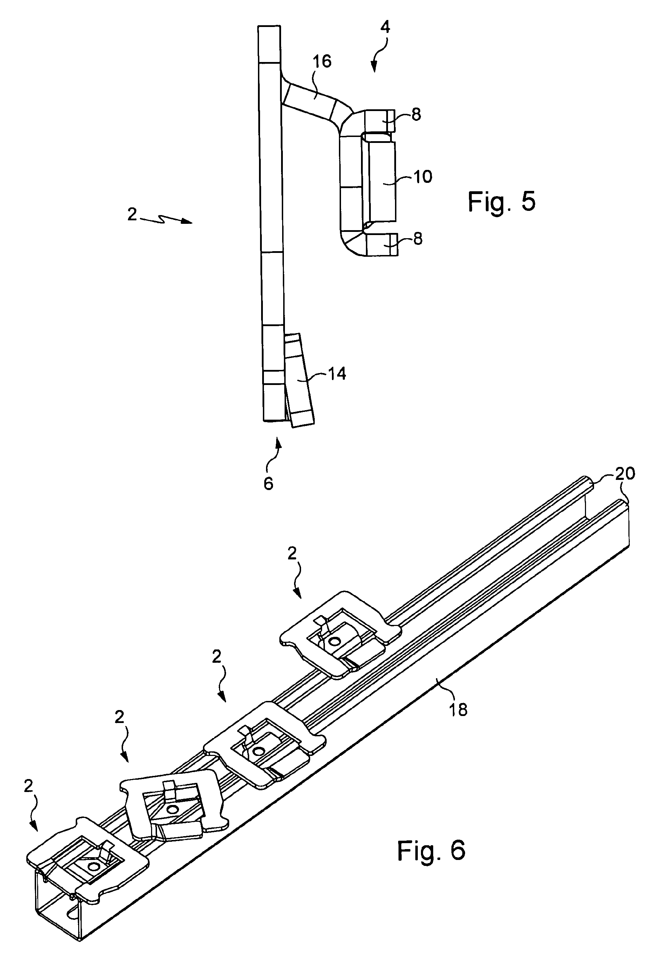

La figure 6 illustre le montage d'un élément de fixation 2 sur un élément profilé 18. Ce dernier présente une section transversale en C. Il s'agit donc d'un profilé ouvert. Comme on peut le remarquer sur la figure 6, les bords libres du profilé en C sont repliés vers l'intérieur du profilé formant ainsi dans le profilé, au niveau des bords de l'ouverture du profilé, des saillies de retenue 20.

Sur la figure 6, quatre éléments de fixation 2 sont représentés. Chacun de ces éléments de fixation 2 présente une position relative différente par rapport à l'élément profilé 18. Vers le centre de la figure 6, l'élément de fixation 2 est libre par rapport à l'élément profilé 18. À gauche de la figure 6, l'élément de fixation 2 est entièrement monté sur l'élément profilé 18, les deux autres éléments de fixation 2 représentés étant dans des positions intermédiaires entre ces deux positions extrêmes représentées.

Tout d'abord, pour réaliser le montage d'un élément de fixation 2 sur un élément profilé 18, l'élément de fixation 2 est présenté face à l'ouverture de l'élément profilé 18 de telle sorte que la plaque de fixation 4 de l'élément de fixation 2 se trouve face à l'ouverture de l'élément profilé 18, les côtés allongés de la plaque de fixation 4 étant sensiblement parallèles aux bords de l'ouverture de l'élément profilé 18. On remarque ici que la largeur de l'ouverture de l'élément profilé 18 est supérieure à la largeur I de la plaque de fixation 4 mais inférieure à la longueur L, correspondant à la longueur de la plaque de fixation 4.

On suppose dans la suite de la description que l'orientation prévue précédemment est reprise. Ainsi, on suppose ici que l'élément profilé 18 s'étend à l'horizontale, sa face ouverte se trouvant en position haute.

Par rapport à la première position représentée au centre de la figure 6, l'élément de fixation 2 est abaissé de telle sorte que la plaque de fixation 4 pénètre à l'intérieur de l'élément profilé 18 et vienne se trouver en dessous des saillies de retenue 20.

Dans cette seconde position, le cadre d'appui 6 repose sur les saillies de retenue 20. La branche 12 centrale du cadre d'appui 6 repose longitudinalement sur une saillie de retenue 20. De l'autre côté, la patte élastique 14 se trouve en porte-à-faux à l'extérieur de l'élément profilé 18.

L'élément de fixation 2, en vue de dessus, est alors pivoté autour d'un axe vertical, dans le sens des aiguilles d'une montre (sens trigonométrique inverse). La plaque de fixation 4 pivote alors à l'intérieur de l'élément profilé 18. La forme de cette plaque, et sa longueur L, sont réalisées bien entendu de telle sorte que les extrémités de la plaque de fixation 4 ne viennent pas buter contre les parois intérieures de l'élément profilé 18.

Lorsque le pivotement débute, un point dur apparaît lorsque la patte élastique 14 commence à devoir passer sur une saillie de retenue 20. Cette patte élastique 14 étant d'une part élastique et d'autre part présentant une extrémité libre, elle se déforme vers le haut permettant ainsi de passer au-dessus de la saillie de retenue 20. Durant ce pivotement, la plaque de fixation 4 passe sous les saillies de retenue 20 et est maintenue par ces saillies. Une déformation élastique est également observée au niveau du pontet de liaison 16.

Lorsque l'élément de liaison 2 a pivoté d'un quart de tour (90°), la patte élastique 14 se trouve en position transversale par rapport à l'élément profilé 18. Cette patte élastique 14 est ici dimensionnée de manière à venir se loger entre les deux saillies de retenue 20. L'extrémité libre de la patte élastique 14 vient au contact, ou quasiment au contact, d'un bord de l'ouverture de l'élément profilé 18. À l'autre extrémité de la patte élastique 14, la zone de raccordement de celle-ci à la branche 12 correspondante du cadre d'appui 6 se trouve au-dessus de l'autre saillie de retenue 20. La patte élastique 14 vient alors verrouiller l'élément de fixation 2 sur l'élément profilé 18. La distance séparant le plan de la plaque de fixation 4 et le cadre d'appui 6 est adaptée à la hauteur des saillies de retenue 20. Les tolérances de fabrication de l'élément profilé 18 et de l'élément de fixation 2 sont telles que l'on a un appui d'une part entre la face supérieure de la plaque de fixation 4 et le dessous des saillies de retenue 20 et d'autre part entre la face inférieure du cadre d'appui 6 et le dessus des saillies de retenue 20.

En outre, la longueur L de la plaque de fixation 4 correspond sensiblement à la largeur intérieure de l'élément profilé 18. La forme de cette plaque de fixation 4 est également telle qu'il n'est pas possible de continuer de la faire pivoter au-delà de 90° à l'intérieur de l'élément profilé 18. On réalise donc de la sorte un second arrêt, en plus de celui créé par la patte élastique 14, de la rotation de l'élément de fixation 2 par rapport à l'élément profilé 18. Ce second arrêt, permet également de réaliser le vissage d'un élément sur la plaque de fixation 4 sans qu'elle-même et l'ensemble de l'élément de fixation 2 ne soient entraînés en rotation.

Une fois ainsi positionné sur un élément profilé 18, un élément de fixation 2 selon la présente invention peut servir à l'assemblage vissé d'un accessoire (console, support, etc.) sur l'élément profilé 18.

L'élément de fixation 2 est le plus souvent utilisé pour venir fixer par vissage un accessoire ou similaire sur un élément profilé 18 déjà monté sur un plafond ou une autre paroi. On peut alors munir l'élément profilé 18 d'un élément de fixation 2 selon l'invention comme mentionné plus haut. L'accessoire ou similaire est alors monté à l'aide d'une vis qui vient en prise dans la zone cylindrique 10 taraudée de l'élément de fixation 2. Pour assurer le blocage de cet élément de fixation 2 sur l'élément profilé 18, la vis est alors vissée jusqu'à venir en appui sur le fond de l'élément profilé 18.

Parfois aussi, l'élément profilé 18 est monté sur une tige filetée (non représentée) pour être par exemple fixé à un plafond, à distance de celui-ci. Dans un tel cas, un écrou (non représenté) est de préférence vissé sur la tige filetée, puis la tige filetée est vissée dans la zone cylindrique 10 taraudée de l'élément de fixation 2. L'écrou monté alors au préalable sur la tige filetée est alors serré en venant en appui (directement ou par l'intermédiaire d'une pièce telle une rondelle) sur le cadre d'appui 6 de manière à réaliser un pincement des saillies de retenue 20 et assurer ainsi un parfait maintien, d'une part de l'élément de fixation 2 sur l'élément profilé 18 et par là d'autre part de l'élément profilé 18 sur la tige filetée.

Comme indiqué plus haut, une fois l'élément de fixation monté sur l'élément profilé 18, celui-ci est maintenu en place. Toutefois, il est bien entendu possible de démonter cet élément de fixation.

Pour un tel démontage, il suffit de faire pivoter l'élément de fixation 2 dans le sens inverse des aiguilles d'une montre (ou sens trigonométrique) d'un quart de tour. Pour faciliter de démontage, on peut venir agir par exemple à l'aide d'un tournevis sur la patte élastique 14.

L'élément de fixation selon l'invention, comme indiqué plus haut, est facile à mettre en oeuvre. En outre, le prix de revient de cet élément peut être optimisé de manière à avoir un élément bon marché.

Bien entendu, la présente invention ne se limite pas à la forme de réalisation préférée décrite ci-dessus à titre d'exemple non limitatif. Elle concerne également les variantes de réalisation à la portée de l'homme du métier dans le cadre des revendications ci-après.

Ainsi par exemple, on ne sortirait pas du cadre de l'invention si la zone cylindrique était remplacée par un écrou que l'on venait souder sur la plaque de fixation.

En outre, les moyens de verrouillage, qui comportent dans la forme de réalisation décrite ci-dessus une patte élastique, pourraient comprendre d'autres moyens élastiques permettant de réaliser le verrouillage de l'élément de fixation une fois celui-ci en place sur un élément profilé.

## Revendications

1. Élément de fixation (2) pour rail profilé (18) comportant une face ouverte le long de laquelle se trouvent des saillies de retenue (20), ledit élément de fixation (2) comportant une plaque de fixation (4) dimensionnée de manière à pouvoir être introduite à l'intérieur du rail profilé (18) par sa face ouverte dans une première position puis venir s'engager en pivotant, par exemple de 90°, derrière les saillies de retenue (20), pour venir dans une seconde position, dite position montée,
**caractérisé en ce que** la plaque de fixation (4) est reliée à un cadre d'appui (6) ouvert sensiblement parallèle à la plaque de fixation (4) mais décalé par rapport à celle-ci, et **en ce que** ledit cadre comporte des moyens de verrouillage (14) élastiques qui, en position montée, sont disposés entre les saillies de retenue (20) du rail profilé (18).

2. Élément de fixation (2) selon la revendication 1, **caractérisé en ce que** la plaque de fixation (4) présente une zone cylindrique (10) taraudée s'étendant sensiblement perpendiculairement au plan de la plaque de fixation (4).

3. Élément de fixation (2) selon la revendication 2, **caractérisé en ce que** la zone cylindrique (10) taraudée ne forme qu'une seule pièce avec la plaque de fixation (4).

4. Élément de fixation (2) selon l'une des revendications 1 à 3, **caractérisé en ce que** la plaque de fixation (4) présente des nervures (8) de renfort à sa périphérie.

5. Élément de fixation (2) selon l'une des revendications 1 à 4, **caractérisé en ce que** le cadre d'appui (6) présente trois branches (12) disposées en U dans un même plan, et **en ce que** la plaque de fixation (4) est fixée au cadre d'appui (6) par un pontet de liaison (16) reliant la plaque de fixation (4) à la branche (12) centrale du cadre d'appui (6).

6. Élément de fixation (2) selon l'une des revendications 1 à 5, **caractérisé en ce que** les moyens de verrouillage comportent une languette élastique (14) s'étendant à partir du cadre d'appui (6) vers la plaque de fixation (4).

7. Élément de fixation (2) selon les revendications 5 et 6, **caractérisé en ce que** la languette élastique (14) s'étend à partir d'une extrémité d'une branche (12) du U vers l'extrémité de l'autre branche (12) du U, la languette (14) étant rattachée à une seule extrémité d'une branche (12) du U.

8. Élément de fixation (2) selon la revendication 7, **caractérisé en ce que** la languette élastique (14) est pliée selon deux directions distinctes par rapport à la branche (12) du U à laquelle elle est rattachée.

9. Élément de fixation (2) selon l'une des revendications 1 à 8, **caractérisé en ce qu'**il est réalisé par découpe et pliage d'une tôle, avec réalisation d'un taraudage.

10. Ensemble comportant un rail profilé (18) présentant une face ouverte le long de laquelle se trouvent des saillies de retenue (20) et un élément de fixation (2), **caractérisé en ce que** l'élément de fixation (2) est un élément de fixation selon l'une des revendications 1 à 9.
